# EUROPEAN PATENT SPECIFICATION

(11) **EP 2 645 643 B1**
(45) Date of publication and mention of the grant of the patent: **08.11.2017**
(21) Application number: 12305346.4
(22) Date of filing: 26.03.2012
(51) Int. Cl.: H04L 12/705, H04L 12/715, H04L 12/707, H04L 12/703

(54) **Interconnection protection in a communication system**
Verbindungsschutz in einem Kommunikationssystem
Protection d'interconnexion dans un système de communication

(43) Date of publication of application: 02.10.2013
(73) Proprietor: ALCATEL LUCENT, 92100 Boulogne-Billancourt (FR)
(72) Inventor: Torassa, Sergio, 17019 VARAZZE (SV) (IT)
(74) Representative: Wetzel, Emmanuelle

(56) References cited:
- EP-A1- 1 662 706
- WO-A2-2007/047867
- US-A1- 2006 193 248

## Description

### Technical field

The present invention relates to the field of communication systems. In particular, the present invention relates to a method for protecting an interconnection between two communication networks (or two sub-networks, or two network portions) of a communication system. Further, the present invention relates to a node implementing such a method and a communication network comprising such a node.

### Background art

A communication system may comprise networks of different types interconnected each other for supporting transmission of traffic exchanged between end users. For instance, a communication system may comprise a transport network and a number of user networks connected to the transport network. Each user network transmits to the transport network upstream traffic generated by one or more CPE (Customer User Equipment) and receives from the transport network downstream traffic addressed to the one or more CPE.

The transport network typically is either a synchronous circuit-switched network (e.g. an SDH or Sonet network) or a packet-switched network wherein traffic is transported by a label-switched protocol (e.g. the T-MPLS protocol, i.e. Transport Multi-Protocol Label Switching). On the other hand, user networks generally are Ethernet networks, ATM networks or the like.

The interconnection between a user network and a transport network is typically implemented as follows. A node of the user network (which is typically termed "access node") is connected to a node of the transport network (which is typically termed "edge node") by means of a physical link (which is typically termed "network link").

Traffic protection mechanisms are typically provided within the transport network and the user network for protecting traffic against link failures or node failures. For instance, the transport network may be provided with a 1 +1 protection mechanism providing a pair of paths (namely, a primary path and a secondary path) both terminating at the edge node. In failure-free conditions, traffic is carried along the primary path. If a failure occurs at a link or node of the primary path, traffic is switched to the secondary path. A 1+1 traffic protection mechanism of this type is defined e.g. by ITU-T Recommendation G.841 for SDH networks, ITU-T Recommendation G.8131 for T-MPLS networks and ITU-T Recommendation G.8031 for Ethernet networks.

Traffic protection mechanisms implemented within the transport network and user network are however not capable of protecting traffic against failures affecting the interconnection between user network and transport network, namely node failures affecting the access node or edge node, or link failures affecting the network link between access node and edge node.

In order to provide interconnection protection, a user network may be connected to the transport network by means of the so-called "dual homing" scheme. According to the dual homing scheme, a first and second access nodes of the user network (which are usually termed "primary access node" and "secondary access node", respectively) are connected to a first and second edge nodes of the transport network (which are usually termed "primary edge node" and "secondary edge node", respectively) by means of a first and second network links (which are usually termed "primary network link" and "secondary network link", respectively). The primary and secondary access nodes are bi-directionally interconnected with each other and also the primary and secondary edge nodes are bi-directionally interconnected with each other.

Within the transport network, a primary path terminates at the primary edge node, while a secondary path terminates at the secondary edge node. Within the user network, a primary access link connects the primary access node to the CPE, while a secondary access link connects the secondary access node to the CPE.

In failure-free conditions, upstream traffic generated by the CPE and downstream traffic addressed to the CPE are carried by the primary access link, primary access node, primary network link and primary edge node.

If a failure occurs at the interconnection between user network and transport network (namely, at any of the primary access link, primary access node, primary network link and primary edge node), the access nodes and the edge nodes are capable of automatically reconfiguring themselves to establish at the interconnection a path bypassing the failure.

For instance, if a failure occurs at the primary access node, the upstream traffic generated by the CPE is received at the secondary access node from the secondary access link (the traffic protection mechanism implemented within the user network reroutes the upstream traffic from the primary access node to the secondary access node), forwarded to the secondary edge node along the secondary network link, forwarded to the primary edge node and then transmitted along the primary path within the transport network. Besides, downstream traffic is received at the primary edge node from the primary path, rerouted to the secondary edge node, forwarded to the secondary access node along the secondary network link and then forwarded towards the destination CPE along the secondary access link within the user network.

A dual redundancy scheme similar to dual homing may be employed for protecting not only the interconnection between transport network and user network, but also the interconnection between two communication networks of any type, the interconnection between two sub-networks or the interconnection between two portions of a same communication network. According to such dual redundancy scheme, the two communication networks, sub-networks or network portions are interconnected by a pair of primary nodes (corresponding to the primary access node and primary edge node) and a pair of secondary nodes (corresponding to the secondary access node and secondary edge). The primary and secondary nodes are mutually interconnected as described above. In failure-free conditions, traffic is carried by the primary nodes. In case a failure occurs at the interconnection (namely, at any of the primary nodes, secondary nodes or links connecting primary and secondary nodes), the primary and secondary nodes are capable of automatically reconfiguring themselves to establish at the interconnection a path bypassing the failure.

US 2006/0193248 discloses a local fast reroute (FRR) technique implemented at the edge of a computer network. In accordance with the technique, if an edge device detects a node or link failure that prevents it from communicating with a neighboring routing domain, the edge device reroutes at least some data packets addressed to that domain to a backup edge device which, in turn, forwards the packets to the neighboring domain. The rerouted packets are designated as being "protected" (i.e., rerouted) data packets before they are forwarded to the backup edge device. The backup edge device identifies protected data packets as those which contain a predetermined "service" label in their MPLS label stacks. In other words, the service label is used as an identifier for packets that have been FRR rerouted. Upon receiving a data packet containing a service label, the backup edge device is not permitted to reroute the packet a second time, e.g. in response to another inter-domain node or link failure, thereby preventing loops from developing at the edge of the network.

WO 2007/047867 discloses constructing and implementing a backup path in an autonomous system (AS) for failure of a first inter-AS link (e.g., serving a first set of prefixes). In one or more embodiments, a method comprises identifying an alternate inter-AS link serving said plurality of prefixes and constructing a tunnel thereto. Also, in one or more embodiments, a method comprises identifying an alternate inter-AS path and constructing a tunnel to an end point on the alternate path. Further, in one or more embodiments, a method comprises forwarding data elements destined for the failed link via a backup path and including a loop prevention attribute in the packet. Still further, a method of managing forwarding of data in an AS is described, e.g., communications between border routers.

### Summary of the invention

The above dual homing scheme (and, more generally, dual redundancy scheme) allows protecting traffic against single node failures of the primary nodes or secondary nodes and single bi-directional link failures of the links between primary and secondary nodes. Such schemes also allow protecting traffic against some combinations of link or node failures occurring substantially simultaneously, such as for instance a failure occurring at the primary network link and a failure substantially simultaneously occurring at the primary access link.

Such schemes however are not capable of managing any combination of simultaneous failures. For instance, in case of a failure occurring at the primary access node and a failure substantially simultaneously occurring at the secondary access node, no path bypassing both such failures may be established at the interconnection between user network and transport network. Hence, the upstream traffic generated by the CPE can not reach the transport network, and similarly the downstream traffic addressed to the CPE can not reach the user network.

The Applicant has noticed that, disadvantageously, in this situation network resources may be needlessly wasted at the interconnection. In particular, when the primary edge node realizes that the primary access node is affected by a failure, according to the dual homing scheme it automatically reconfigures itself to reroute the downstream traffic received from the transport network towards the secondary edge node. At the same time, when the secondary edge node realizes that the secondary access node is affected by a failure, it automatically reconfigures itself to reroute the downstream traffic received from the primary edge node again towards the primary edge node.

This disadvantageously creates a loop whereby downstream traffic is continuously transmitted back and forth between primary and secondary edge nodes, without any chance of bypassing the failures at the primary and secondary access nodes. The primary and secondary edge nodes hence disadvantageously waste bandwidth and computation resources for processing such downstream traffic. Besides, the downstream traffic needlessly occupies bandwidth over the bi-directional physical link between primary and secondary edge nodes.

Accordingly, the Applicant has faced the problem of providing an interconnection protection mechanism for protecting the interconnection between two communication networks (or sub-networks or network portions) of a communication system, which overcomes the aforesaid drawback.

In particular, the Applicant has faced the problem of providing an interconnection protection mechanism for protecting the interconnection between two communication networks (or sub-networks or network portions) of a communication system, which is based on the dual homing scheme (or, more generally, dual redundancy scheme) and which, in case of multiple failures which can not be managed by the traffic protection mechanism itself, allows avoiding traffic loops and consequent waste of bandwidth and computation resources at the links and nodes of the interconnection.

According to a first aspect, the present invention provides a method for protecting an interconnection between a first communication network and a second communication network, the first communication network comprising a node and a further node connected to the second communication network, the node and the further node being connected by a protection link, the node comprising a switch and at least one protection module connected to at least one output of the switch, the method comprising, at the switch, upon reception of a packet:
a) based on a packet destination of the packet, determining, among the at least one protection module, an output protection module to which the packet shall be forwarded;
b) determining whether the packet was received from a further protection module which is comprised in the further node and which implements, together with the output protection module, a bi-directional protection connection over the protection link, said determining being based upon protection information stored at the node and comprising at least an identifier of the further protection module;
c) in the affirmative, determining a current configuration of the output protection module; and
d) if the current configuration is a protection configuration whereby the output protection module forwards traffic received from the switch to the protection link, discarding the packet.

Preferably, step c) comprises, in the negative, forwarding the packet to the output protection module. Preferably, step d) comprises, if the current configuration of the output protection module is an active configuration whereby the output protection module forwards traffic received from the switch to a still further node other than the further node, forwarding the packet to the output protection module.

Preferably, at step c), the current configuration of the output protection module is determined based on the protection information, the protection information further comprising the current configuration.

According to a second aspect, the present invention provides a node for a communication network, the node comprising a switch and at least one protection module connected to at least one output of the switch, the switch being configured to, upon reception of a packet:
- based on a packet destination of the packet, determine, among the at least one protection module, an output protection module to which the packet shall be forwarded;
- determine whether the packet was received from a further protection module which is comprised in a further node and which implements, together with the output protection module, a bi-directional protection connection over a protection link connecting the node and the further node, based upon protection information stored at the node and comprising at least an identifier of the further protection module;
- in the affirmative, determine a current configuration of the output protection module; and
- if the current configuration is a protection configuration whereby the output protection module forwards traffic received from the switch to the protection link, discard the packet.

Preferably, the switch is further configured to, if the packet was not received from the further protection module, forward the packet to the output protection module. Preferably, the switch is further configured to, if the current configuration of the output protection module is an active configuration whereby the output protection module forwards traffic received from the switch to a still further node other than the further node, forwarding the packet to the output protection module.

Preferably, the protection information comprises the current configuration of the output protection module.

According to a third aspect, the present invention provides a communication system comprising a first communication network and a second communication network, the first communication network comprising a node and a further node connected to the second communication network, the node and the further node being connected by a protection link, the node being as set forth above.

According to a fourth aspect, the present invention provides a computer program product comprising computer-executable instructions for performing, when the program is run on a computer at a node a communication network, all the steps of the method as set forth above.

### Brief description of the drawings

The present invention will become clearer by reading the following detailed description, given by way of example and not of limitation, to be read by referring to the accompanying drawings, wherein:
- Figure 1 schematically shows a portion of a communication system comprising two interconnected communication networks according to an embodiment of the present invention, in failure-free conditions;
- Figure 2 show an arrangement comprising two nodes according to an embodiment of the present invention;
- Figure 3 is a flow chart of the operation of a node of Figure 2;
- Figure 4 shows the communication system of Figure 1 in a single-failure scenario;
- Figure 5 shows the communication system of Figure 1 in a first double-failure scenario; and
- Figure 6 shows the communication system of Figure 1 in a second double-failure scenario.

### Detailed description of preferred embodiments of the invention

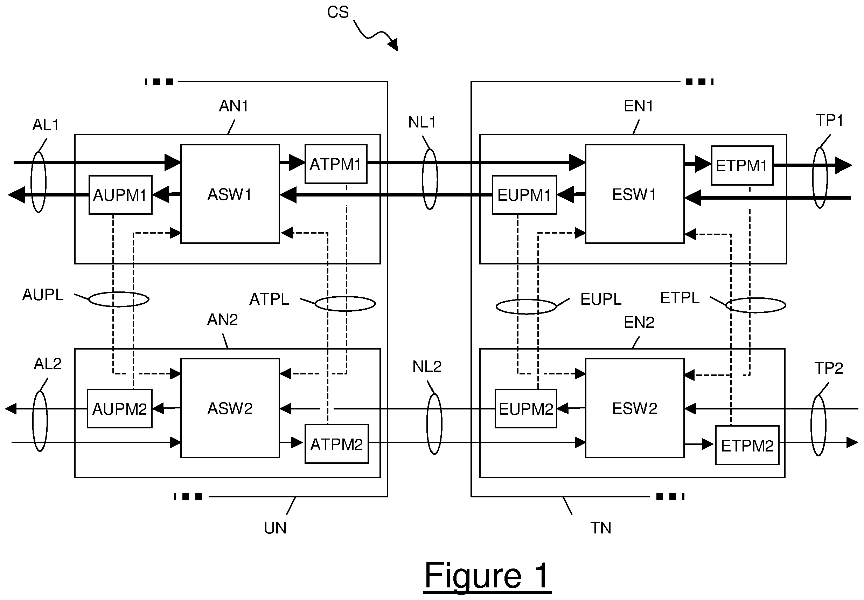

Figure 1 schematically shows a communication system CS comprising a first communication network UN and a second communication network TN reciprocally interconnected, according to an embodiment of the present invention. In the following description, by way of non-limiting example, it is assumed that the first communication network UN is a user network (for instance, an Ethernet network or an ATM network) and the second communication network TN is a transport network (for instance, an SDH network or a T-MPLS network). This is non limiting, since the first communication network UN and the second communication network TN may be communication networks of any type, or sub-networks of a same communication network, or portions of a same communication network.

Preferably, the user network UN comprises a primary access node AN1, a secondary access node AN2, a primary access link AL1 terminating at the primary access node AN1 and a secondary access link AL2 terminating at the secondary access node AN2. Further, preferably, the transport network TN comprises a primary edge node EN1, a secondary edge node EN2, a primary transport path TP1 terminating at the primary edge node EN1 and a secondary transport path TP2 terminating at the secondary edge node EN2. The communication system CS further comprises a primary network link NL1 connecting the primary access node AN1 and the primary edge node EN1 and a secondary network link NL2 connecting the secondary access node AN2 and the secondary edge node EN2. The communication system CS further comprises a user-side protection link AUPL and a transport-side protection link ATPL connecting the access nodes AN1, AN2. The communication system CS further comprises a user-side protection link EUPL and a transport-side protection link ETPL connecting the edge nodes EN1, EN2.

Each access node AN1, AN2 preferably comprises an access switch ASW1, ASW2 having a number of inputs and a number of outputs. In particular, each access switch ASW1, ASW2 has a user-side input, a user-side output, a transport-side input, a transport-side output, a user-side protection input and a transport-side protection input. For instance, if the user network UN is an Ethernet network, the access switches ASW1, ASW2 are Ethernet switches.

Each access node AN1, AN2 further comprises a user-side protection module AUPM1, AUPM2 and a transport-side protection module ATPM1, ATPM2. Each user-side protection module AUPM1, AUPM2 has an input, an active output and a protection output. Similarly, each transport-side protection module ATPM1, ATPM2 has an input, an active output and a protection output.

The user-side input of the access switch ASW1, ASW2 is connected to the access link AL1, AL2, its transport-side input is connected to the network link NL1, NL2, its user-side protection input is connected to the user-side protection link AUPL and its transport-side protection input is connected to the transport-side protection link ATPL. Besides, the user-side output of the access switch ASW1, ASW2 is connected to the input of the user-side protection module AUPM1, AUPM2, whose active output is in turn connected to the access link AL1, AL2 and protection output is in turn connected to the user-side protection link AUPL. Similarly, the transport-side output of the access switch ASW1, ASW2 is connected to the input of the transport-side protection module ATPM1, ATPM2, whose active output is in turn connected to the network link NL1, NL2 and protection output is in turn connected to the transport-side protection link ATPL.

The user-side protection modules AUPM1 and AUPM2 therefore are reciprocally associated, in that they implement a user-side bi-directional protection connection (indicated by dashed lines in Figure 1) between the access nodes AN1, AN2 over the user-side protection link AUPL. Similarly, the transport-side protection modules ATPM1 and ATPM2 are reciprocally associated, i.e. they implement a transport-side bi-directional protection connection (indicated by dashed lines in Figure 1) between the access nodes AN1, AN2 over the transport-side protection link ATPL.

Each edge node EN1, EN2 preferably comprises an edge switch ESW1, ESW2 having a number of inputs and a number of outputs. In particular, each edge switch ESW1, ESW2 has a user-side input, a user-side output, a transport-side input, a transport-side output and a user-side protection input. For instance, if the transport network TN is a T-MPLS network, the edge switches ESW1, ESW2 may be MPLS routers whose outputs correspond to different pseudo-wires.

Each edge node EN1, EN2 further comprises a user-side protection module EUPM1, EUPM2 and a transport-side protection module ETPM1, ETPM2. Each user-side protection module EUPM1, EUPM2 has an input, an active output and a protection output. Similarly, each transport-side protection module ETPM1, ETPM2 has an input, an active output and a protection output. For instance, if the transport network TN is a T-MPLS network, each user-side protection module EUPM1, EUPM2 and each of the transport-side protection modules ETPM1, ETPM2 may implement a respective MPLS protection group which may be switched between a first MPLS tunnel (corresponding to the active output) and second MPLS tunnel (corresponding to the protection output).

The user-side input of the edge switch ESW1, ESW2 is connected to the network link NL1, NL2, its transport-side input is connected to the transport path TP1, TP2, its user-side protection input is connected to the user-side protection link EUPL and its transport-side protection input is connected to the transport-side protection link ETPL. Besides, the user-side output of the edge switch ESW1, ESW2 is connected to the input of the user-side protection module EUPM1, EUPM2, whose active output is in turn connected to the network link NL1, NL2 and protection output is in turn connected to the user-side protection link EUPL. Similarly, the transport-side output of the edge switch ESW1, ESW2 is connected to the input of the transport-side protection module ETPM1, ETPM2, whose active output is in turn connected to the transport path TP1, TP2 and protection output is in turn connected to the transport-side protection link ETPL.

The user-side protection modules EUPM1 and EUPM2 therefore are reciprocally associated, i.e. they implement a user-side bi-directional protection connection (indicated by dashed lines in Figure 1) between the edge nodes EN1, EN2 over the user-side protection link EUPL. Similarly, the transport-side protection modules ETPM1 and ETPM2 are reciprocally associated, i.e. they implement a transport-side bi-directional protection connection (indicated by dashed lines in Figure 1) between the edge nodes EN1, EN2 over the transport-side protection link ETPL.

At each access node AN1, AN2, each access switch ASW1, ASW2 is configured to receive traffic through any of their inputs and, based on the traffic destination (which is indicated e.g. by the MAC destination address, in case of Ethernet traffic), forward such traffic through one of its outputs. The choice of the output through which traffic has to be forwarded is preferably based upon a forwarding table (not shown in the drawings for simplicity) stored at the access node AN1, AN2 and accessible by the access switch ASW1, ASW2. Further, at each access node AN1, AN2 each user-side protection module AUPM1, AUMP2 is configured to selectively switch between an active configuration, where downstream traffic received through its input is forwarded through its active output to the access link AL1, AL2, and a protection configuration, where downstream traffic received through its input is forwarded through its protection output to the other access node AN2, AN1 through the user-side protection link AUPL. Further, at each access node AN1, AN2 each transport-side protection module ATPM1, ATPM2 is configured to selectively switch between an active configuration, where upstream traffic received through its input is forwarded through its active output to the network link NL1, NL2, and a protection configuration, where upstream traffic received through its input is forwarded through its protection output to the other access node AN2, AN1 through the transport-side protection link ATPL.

Similarly, at each edge node EN1, EN2, each edge switch ESW1 is configured to receive traffic through any of its inputs and, based on the traffic destination (which is indicated e.g. by the MPLS label, in case of MPLS traffic), to forward such traffic through one of its outputs. The choice of the output through which traffic has to be forwarded is preferably based upon a forwarding table (not shown in the drawings for simplicity) stored at the edge node EN1, EN2 and accessible by the edge switch ESW1, ESW2. Further, each user-side protection module EUPM1, EUPM2 is configured to selectively switch between an active configuration, where downstream traffic received through its input is forwarded through its active output to the network link NL1, NL2, and a protection configuration, where downstream traffic received through its input is forwarded through its protection output to the other edge node EN2, EN1 through the user-side protection link EUPL. Further, at each edge node EN1, EN2 each transport-side protection module ETPM1, ETPM2 is configured to selectively switch between an active configuration, where upstream traffic received through its input is forwarded through its active output to the transport path TP1, TP2, and a protection configuration, where upstream traffic received through its input is forwarded through its protection output to the other edge node EN2, EN1 through the transport-side protection link ETPL.

According to preferred embodiments of the present invention, each access node AN1, AN2 stores at least one of the following protection information:
- current configuration of its user-side protection module AUPM1, AUPM2 (namely, active configuration or protection configuration);
- current configuration of its transport-side protection module ATPM1, ATPM2 (namely, active configuration or protection configuration);
- identifier of the associated user-side protection module which, together with the user-side protection module AUPM1, AUPM2, implements a user-side protection connection between the access nodes AN1, AN2 over the user-side protection link AUPL (namely the user-side protection module AUPM2, AUPM1 of the other access node AN2, AN1); and
- identifier of the associated transport-side protection module which, together with the transport-side protection module ATPM1, ATPM2, implements a transport-side protection connection between the access nodes AN1, AN2 over the transport-side protection link ATPL (namely the transport-side protection module ATPM2, ATPM1 of the other access node AN2, AN1).

Further, according to preferred embodiments of the present invention, each edge node EN1, EN2 preferably stores at least one of the following protection information:
- current configuration of its user-side protection module EUPM1, EUPM2 (namely, active configuration or protection configuration);
- current configuration of its transport-side protection module ETPM1, ETPM2 (namely, active configuration or protection configuration);
- identifier of the associated user-side protection module which, together with the user-side protection module EUPM1, EUPM2, implements a user-side protection connection between the edge nodes EN1, EN2 over the user-side protection link EUPL (namely the user-side protection module EUPM2, EUPM1 of the other edge node EN2, EN1); and
- identifier of the associated transport-side protection module which, together with the transport-side protection module ETPM1, ETPM2, implements a transport-side protection connection between the edge nodes EN1, EN2 over the transport-side protection link ETPL (namely the transport-side protection module ETPM2, ETPM1 of the other edge node EN2, EN1).

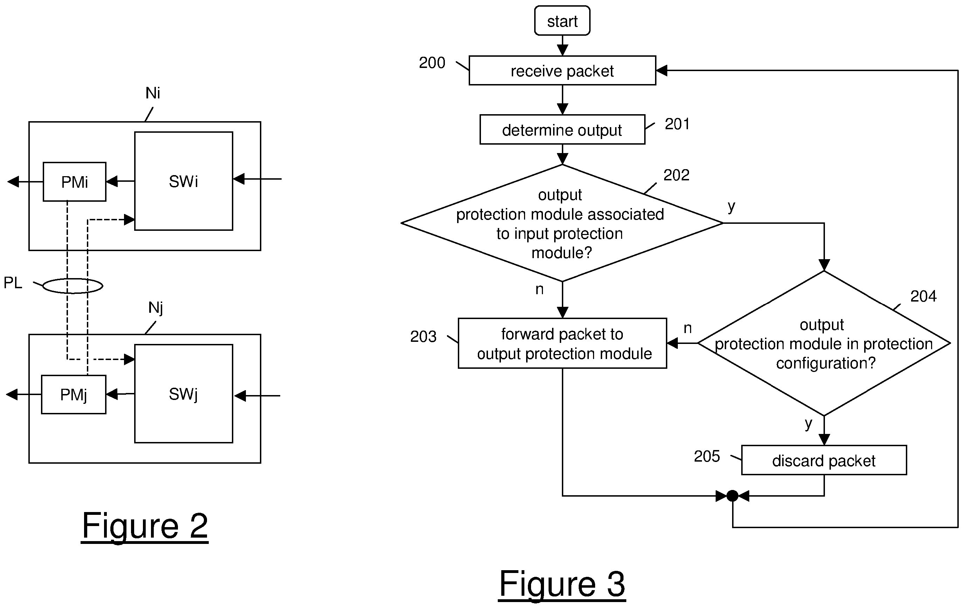

With reference to Figures 2 and 3, the operation of the nodes AN1, AN2, EN1, EN2 according to an embodiment of the present invention will be described in further detail. Herein after, reference will be made to a generic node Ni shown in Figure 2, which may be any of AN1, AN2, EN1 or EN2. Although the access nodes AN1, AN2 and the edge nodes EN1, EN2 may be based on different technologies, they all preferably perform the steps of the flow chart of Figure 3.

The node Ni comprises a switch SWi and at least one protection module PMi whose input is connected to an output of the switch SWi. The node Ni is connected to a further node Nj by means of a physical protection link PL. Also the further node Nj comprises a switch SWj and at least one protection module PMj whose input is connected to an output of the switch SWj. Each switch SWi, SWj has a protection input connected to the protection link PL. Further, each protection module PMi, PMj has its protection output connected to the protection link PL. This way, the protection modules PMi and PMj are reciprocally associated, i.e. they implement a bi-directional protection connection between the node Ni and the further node Nj over the protection link PL.

Further, the node Ni preferably stores at least one of the following protection information:
- current configuration of its protection module PMi (namely, active configuration or protection configuration); and
- identifier of the associated protection module PMj which, together with the protection module PMi, implements a bi-directional protection connection between the nodes Ni, Nj over the protection link PL.

At the node Ni, as the switch SWi receives at one of its inputs a packet belonging to either downstream or upstream traffic (step 200), it preferably determines the output at which the packet shall be forwarded (step 201). Such determination preferably comprising reading in the header of the received packet information indicative of the packet destination (e.g. the Ethernet MAC address, the MPLS label, etc.) and looking up a routing table for determining the output associated to the read packet destination. Step 201 further comprises determining the protection module connected to the switch output through which the packet shall be forwarded. Such protection module will be termed herein after "output protection module". Further, herein after it will be assumed that the output protection module determined at step 201 is the protection module PMi.

Then, at step 202, the switch SWi preferably determines whether the protection module from which the packet has been received (herein after termed also "input protection module") is associated to the output protection module PMi determined at step 201. To this purpose, the switch SWi preferably reads in the stored protection information the identifier of the protection module associated to the output protection module PMi and checks whether the associated protection module coincide with the input protection module.

In the negative, the switch SWi preferably forwards the packet to the determined output protection module PMi (step 203). In the affirmative (namely, if the packet was received from the protection module PMj associated to the output protection module PMi), the switch SWi preferably checks the current configuration of the output protection module PMi in the stored protection information (step 204). If the output protection module PMi is in its active configuration, the switch SWi preferably performs the above step 203, namely it forwards the packet to the determined output protection module PMi (step 203). Otherwise, if the output protection module PMi is in its protection configuration, the switch SWi preferably discards the packet (step 205). Steps 200-205 are preferably repeated for each received packet.

In case of multiple failures, the above operation of the node Ni allows avoiding traffic loops between the node Ni comprising the output protection module PMi and the further node Nj comprising the associated protection module PMj, as it will be clear from the following examples.

Figure 1 shows the communication system CS in failure-free conditions. When the communication system CS is in failure-free conditions, all the protection modules of the nodes AN1, AN2, EN1 and EN2 are in their active configuration. Further, the protection mechanisms implemented within the user network UN and the transport network TN are inactive.

Hence, upstream traffic is received at the primary access node AN1 from the primary access link AL1. At the primary access node AN1, the access switch ASW1 preferably determines the output protection module at which the upstream traffic shall be forwarded, namely the transport-side protection module ATPM1 (step 201). The access switch ASW1 then determines whether the input protection module from which the upstream traffic has been received is associated to the output protection module ATPM1 (step 202). Since - as mentioned above - the transport-side protection module ATPM1 is associated to the transport-side protection module ATPM2, the access switch ASW1 forwards the upstream traffic to the transport-side protection module ATPM1 (step 203). The transport-side protection module ATPM1, being in its active configuration, forwards the upstream traffic to the primary edge node EN1 through the primary network link NL1. At the primary edge node EN1, the edge switch ESW1 preferably determines the output protection module at which the upstream traffic shall be forwarded, namely the transport-side protection module ETPM1 (step 201). The edge switch ESW1 then determines whether the input protection module from which the upstream traffic has been received (namely, the transport-side protection module ATPM1 of the primary access node AN1) is associated to the output protection module ETPM1 (step 202). Since - as mentioned above - the transport-side protection module ETPM1 is associated to the transport-side protection module ETPM2, the edge switch ESW1 forwards the upstream traffic to the transport-side protection module ETPM1 (step 203). The transport-side protection module ETPM1, being in its active configuration, forwards the upstream traffic to the primary transport path TP1.

Besides, downstream traffic is received at the primary edge node EN1 from the primary transport path TP1. At the primary edge node EN1, the edge switch ESW1 preferably determines the output protection module to which the downstream traffic shall be forwarded, namely the user-side protection module EUPM1 (step 201). The edge switch ESW1 then determines whether the input protection module from which downstream traffic has been received is associated to the output protection module EUPM1 (step 202). Since - as mentioned above - the user-side protection module EUPM1 is associated to the user-side protection module EUPM2, the edge switch ESW1 forwards the downstream traffic to the user-side protection module EUPM1 (step 203). The user-side protection module EUPM1, being in its active configuration, forwards the downstream traffic to the primary access node AN1 through the primary network link NL1. At the primary access node AN1, the access switch ASW1 preferably determines the output protection module at which the downstream traffic shall be forwarded, namely the user-side protection module AUPM1 (step 201). The access switch ASW1 then determines whether the input protection module from which downstream traffic has been received (namely, the user-side protection module EUPM1) is associated to the output protection module AUPM1 (step 202). Since - as mentioned above - the user-side protection module AUPM1 is associated to the user-side protection module AUPM2, the access switch ASW1 forwards the downstream traffic to the user-side protection module AUPM1 (step 203). The user-side protection module AUPM1, being in its active configuration, forwards the downstream traffic to the primary access link AL1 towards the destination CPE.

The paths followed by the upstream and downstream traffic at the interconnection between the user network UN and the transport network TN is indicated in Figure 1 by bold lines. Basically, traffic crosses the interconnection between the user network UN and the transport network TN passing through the primary branch of the interconnection.

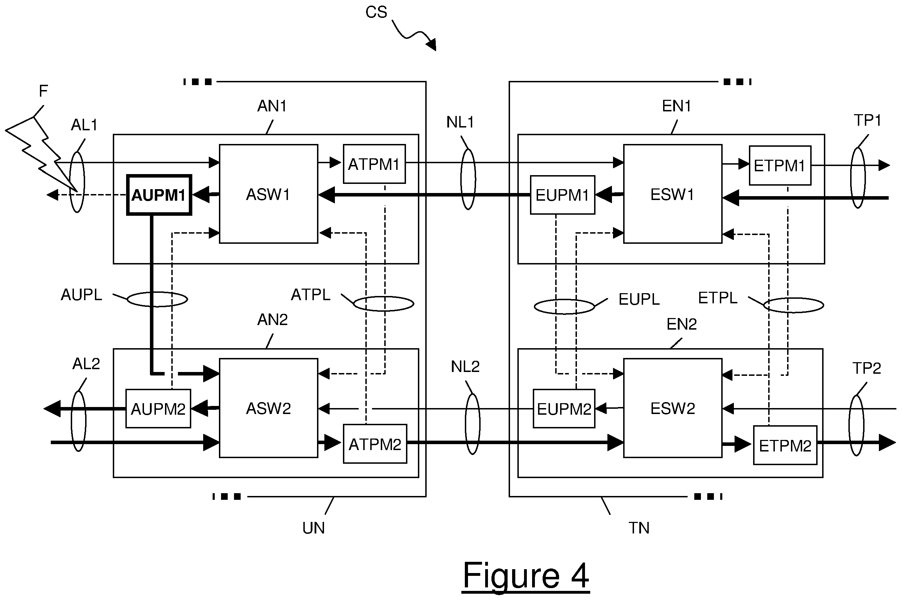

By referring now to Figure 4, it is assumed that a bi-directional failure F occurs at the primary access link AL1.

At the primary access node AN1, when the user-side protection module AUPM1 detects the failure F, it preferably switches to its protection configuration. The protection information relating to the current configuration of the user-side protection module AUPM1 is accordingly updated at the primary access node AN1. Throughout the various Figures, the protection modules switched to their protection configuration are indicated by bold lines.

Further, the protection mechanism implemented within the user network UN activates and induces the CPE which generates the upstream traffic to transmit it to the secondary access node AN2 through the secondary access link AL2.

At the secondary access node AN2, the access switch ASW2 preferably determines the output protection module at which the upstream traffic shall be forwarded, namely the transport-side protection module ATPM2 (step 201). The access switch ASW2 then determines whether the input protection module from which the upstream traffic has been received is associated to the output protection module ATPM2 (step 202). Since - as mentioned above - the transport-side protection module ATPM2 is associated to the transport-side protection module ATPM1, the access switch ASW2 forwards the upstream traffic to the transport-side protection module ATPM2 (step 203). The transport-side protection module ATPM2, being in its active configuration, forwards the upstream traffic to the secondary edge node EN2 through the secondary network link NL2. At the secondary edge node EN2, the edge switch ESW2 preferably determines the output protection module to which the upstream traffic shall be forwarded, namely the transport-side protection module ETPM2 (step 201). The edge switch ESW2 then determines whether the input protection module from which the upstream traffic has been received (namely, the transport-side protection module ATPM2 of the secondary access node AN2) is associated to the output protection module ETPM2 (step 202). Since - as mentioned above - the transport-side protection module ETPM2 is associated to the transport-side protection module ETPM1, the edge switch ESW2 forwards the upstream traffic to the transport-side protection module ETPM2 (step 203). The transport-side protection module ETPM2, being in its active configuration, forwards the upstream traffic to the secondary transport path TP2.

Besides, downstream traffic is received at the primary edge node EN1 from the primary transport path TP1. The operation of the primary edge node EN1 is the same as in the failure-free scenario shown in Figure 1 and will accordingly only briefly summarized. At the primary edge node EN1, the downstream traffic is received by the edge switch ESW1, which decides to forward it to the user-side protection module EUPM1 (steps 201, 202 and 203). The user-side protection module EUPM1, being in its active configuration, forwards the downstream traffic to the primary access node AN1 through the primary network link NL1. Also the operation of the primary access node AN1 is similar to the failure-free scenario shown in Figure 1 and will accordingly only briefly summarized. At the primary access node AN1, the downstream traffic is received by the access switch ASW1, which decides to forward it to the user-side protection module AUPM1 (steps 201, 202 and 203). The user-side protection module AUPM1, being now in its protection configuration (due to detection of the failure F), forwards the downstream traffic to the secondary access node AN2 through the user-side protection link AUPL. At the secondary access node AN2, the access switch ASW2 preferably determines the output protection module at which the downstream traffic shall be forwarded, namely the user-side protection module AUPM2 (step 201). The access switch ASW2 then determines whether the input protection module from which the downstream traffic has been received (namely, the user-side protection module AUPM1) is associated to the output protection module AUPM2 (step 202). Since - as mentioned above - the user-side protection module AUPM2 is associated to the user-side protection module AUPM1, the access switch ASW2 preferably checks the current configuration of the user-side protection module AUPM2 in the stored protection information (step 204). Since the user-side protection module AUPM2 is in its active configuration, the access switch ASW1 decides to forward the downstream traffic to the user-side protection module AUPM2 (step 203). The user-side protection module AUPM2, being in its active configuration, forwards the downstream traffic to the secondary access link AL2 towards the destination CPE.

The paths followed by the upstream and downstream traffic at the interconnection between the user network UN and the transport network TN is indicated in Figure 4 by bold lines. Basically, traffic crosses the interconnection between the user network UN and the transport network TN along a path that bypasses the failure F.

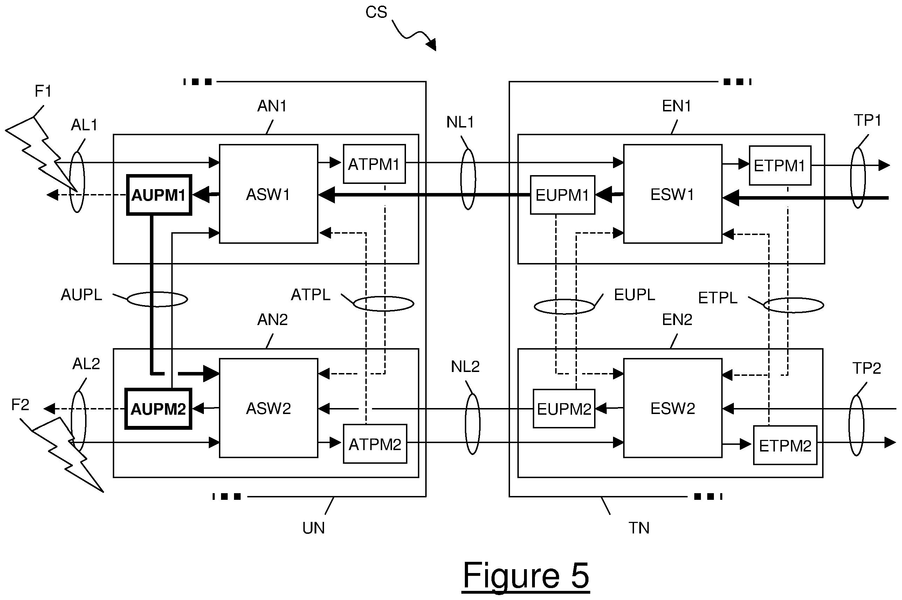

By referring now to Figure 5, it is assumed that a first bi-directional failure F1 occurs at the primary access link AL1 and a second bi-directional failure F2 substantially simultaneously occurs at the secondary access link AL2.

At the primary access node AN1, when the user-side protection module AUPM1 detects the failure F1, it preferably switches to its protection configuration. The protection information relating to the current configuration of the user-side protection module AUPM1 is accordingly updated at the primary access node AN1. Similarly, at the secondary access node AN2, when the user-side protection module AUPM2 detects the failure F2, it preferably switches to its protection configuration. The protection information relating to the current configuration of the user-side protection module AUPM2 is accordingly updated at the secondary access node AN2.

Further, the protection mechanism implemented within the user network UN activates and discards the upstream traffic generated by the CPE.

Besides, downstream traffic is received at the primary edge node EN1 from the primary transport path TP1. The operation of the primary edge node EN1 is the same as in the failure-free scenario shown in Figure 1 and will accordingly only briefly summarized. At the primary edge node EN1, the downstream traffic is received by the edge switch ESW1, which decides to forward it to the user-side protection module EUPM1 (steps 201, 202 and 203). The user-side protection module EUPM1, being in its active configuration, forwards the downstream traffic to the primary access node AN1 through the primary network link NL1. The operation of the primary access node AN1 is the same as in the single failure scenario shown in Figure 4 and will accordingly only briefly summarized. At the primary access node AN1, the downstream traffic is received by the access switch ASW1, which decides to forward it to the user-side protection module AUPM1 (steps 201, 202 and 203). The user-side protection module AUPM1, being now in its protection configuration, forwards the downstream traffic to the secondary access node AN2 through the user-side protection link AUPL. At the secondary access node AN2, the access switch ASW2 preferably determines the output protection module at which the downstream traffic shall be forwarded, namely the user-side protection module AUPM2 (step 201). The access switch ASW2 then determines whether the input protection module from which the downstream traffic has been received (namely, the user-side protection module AUPM1) is associated to the output protection module AUPM2 (step 202). Since - as mentioned above - the user-side protection module AUPM2 is associated to the user-side protection module AUPM1, the access switch ASW2 preferably checks the current configuration of the user-side protection module AUPM2 in the stored protection information (step 204). Since the user-side protection module AUPM2 is now in its protection configuration (due to detection of the failure F2), the access switch ASW2 decides to discard the downstream traffic (step 205).

The path followed by the downstream traffic at the interconnection between the user network UN and the transport network TN is indicated in Figure 5 by bold lines. Basically, no path bypassing the failures F1, F2 may be established at the interconnection for transmitting the downstream traffic to the user network UN. The downstream traffic is accordingly terminated at the secondary access node AN2.

In other words, according to embodiments of the present invention, when the access switch ASW2 realizes that the protection module AUPM2 is in protection configuration and would accordingly forward the downstream traffic to the same protection module from which traffic was received (namely AUPM1), instead of outputting the downstream traffic to the protection module AUPM2, it preferably discards such downstream traffic. This allows avoiding any traffic loop whereby the downstream traffic would be transmitted back and forth between the access nodes AN1, AN2 over the user-side protection link AUPL. Hence, at the access nodes AN1, AN2 no computation resources and no bandwidth are needlessly used for processing the downstream traffic. Also the physical protection link AUPL between the access nodes AN1, AN2 is not needlessly occupied by such downstream traffic.

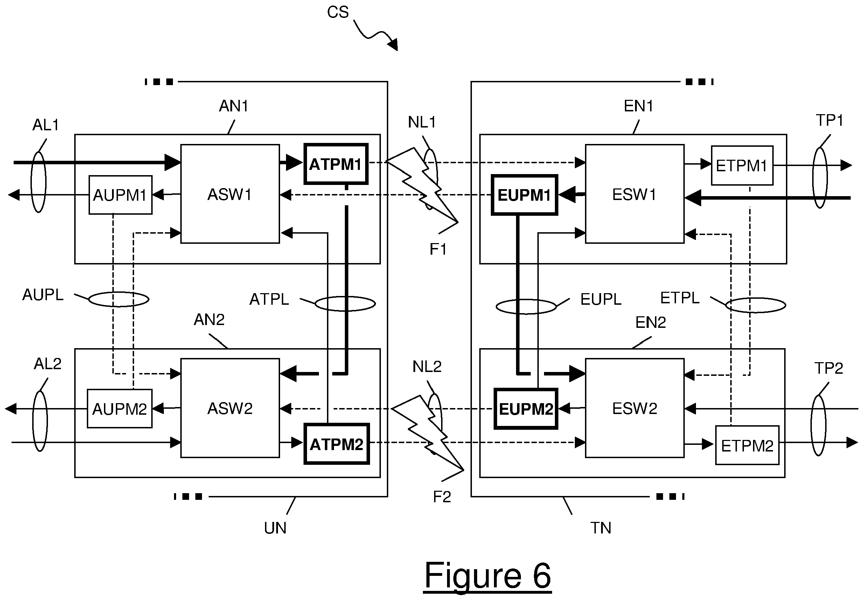

By referring now to Figure 6, it is assumed that a first bi-directional failure F1 occurs at the primary network link NL1 and a second bi-directional failure F2 substantially simultaneously occurs at the secondary network link NL2.

At the primary access node AN1, when the transport-side protection module ATPM1 detects the failure F1, it preferably switches to its protection configuration. The protection information relating to the current configuration of the transport-side protection module ATPM1 is accordingly updated at the primary access node AN1. Similarly, at the secondary access node AN2, when the transport-side protection module ATPM2 detects the failure F2, it preferably switches to its protection configuration. The protection information relating to the current configuration of the transport-side protection module ATPM2 is accordingly updated at the secondary access node AN2. Similarly, at the primary edge node EN1, when the user-side protection module EUPM1 detects the failure F1, it preferably switches to its protection configuration. The protection information relating to the current configuration of the user-side protection module EUPM1 is accordingly updated at the primary edge node EN1. Similarly, at the secondary edge node EN2, when the user-side protection module EUPM2 detects the failure F2, it preferably switches to its protection configuration. The protection information relating to the current configuration of the user-side protection module EUPM2 is accordingly updated at the secondary edge node EN2.

Further, the protection mechanisms implemented within the user network UN and the transport network TN are inactive, since the failures F1, F2 are transparent to such protection mechanisms.

Hence, upstream traffic is received at the primary access node AN1 from the primary access link AL1. At the primary access node AN1, the access switch ASW1 preferably determines the output protection module at which the upstream traffic shall be forwarded, namely the transport-side protection module ATPM1 (step 201). The access switch ASW1 then determines whether the input protection module from which the upstream traffic has been received is associated to the output protection module ATPM1 (step 202). Since - as mentioned above - the transport-side protection module ATPM1 is associated to the transport-side protection module ATPM2, the access switch ASW1 forwards the upstream traffic to the transport-side protection module ATPM1 (step 203). The transport-side protection module ATPM1, being now in its protection configuration (due to detection of the failure F1), forwards the upstream traffic to the secondary access node AN2 through the transport-side protection link ATPL. At the secondary access node AN2, the access switch ASW2 preferably determines the output protection module at which the upstream traffic shall be forwarded, namely the transport-side protection module ATPM2 (step 201). The access switch ASW2 then determines whether the input protection module from which the upstream traffic has been received (namely, the transport-side protection module ATPM1) is associated to the output protection module ATPM2 (step 202). Since - as mentioned above - the transport-side protection module ATPM2 is associated to the transport-side protection module ATPM1, the access switch ASW2 preferably checks the current configuration of the transport-side protection module ATPM2 in the stored protection information (step 204). Since the transport-side protection module ATPM2 is now in its protection configuration (due to detection of the failure F2), the access switch ASW2 decides to discard the upstream traffic (step 205).

Besides, downstream traffic is received at the primary edge node EN1 from the primary transport path TP1. At the primary edge node EN1, the edge switch ESW1 preferably determines the output protection module at which the downstream traffic shall be forwarded, namely the user-side protection module EUPM1 (step 201). The edge switch ESW1 then determines whether the input protection module from which the downstream traffic has been received is associated to the output protection module EUPM1 (step 202). Since - as mentioned above - the user-side protection module EUPM1 is associated to the user-side protection module EUPM2, the edge switch ESW1 forwards the downstream traffic to the user-side protection module EUPM1 (step 203). The user-side protection module EUPM1, being now in its protection configuration (due to detection of the failure F1), forwards the downstream traffic to the secondary edge node EN2 through the user-side protection link EUPL. At the secondary edge node EN2, the edge switch ESW2 preferably determines the output protection module at which the downstream traffic shall be forwarded, namely the user-side protection module EUPM2 (step 201). The edge switch ESW2 then determines whether the input protection module from which the downstream traffic has been received (namely, the user-side protection module EUPM1) is associated to the output protection module EUPM2 (step 202). Since - as mentioned above - the user-side protection module EUPM2 is associated to the user-side protection module EUPM1, the edge switch ESW2 preferably checks the current configuration of the user-side protection module EUPM2 in the stored protection information (step 204). Since the user-side protection module EUPM2 is now in its protection configuration (due to detection of the failure F2), the edge switch ESW2 decides to discard the upstream traffic (step 205).

The path followed by the upstream and downstream traffic at the interconnection between the user network UN and the transport network TN is indicated in Figure 6 by bold lines. Basically, no path bypassing the failures F1, F2 may be established at the interconnection for transmitting the downstream traffic to the user network UN and the upstream traffic to the transport network TN. The upstream traffic is accordingly terminated at the secondary access node AN2, and symmetrically the downstream traffic is terminated at the secondary edge node EN2.

In other words, according to embodiments of the present invention, when the access switch ASW2 realizes that the protection module ATPM2 is in protection configuration and would accordingly forward the upstream traffic to the same protection module from which traffic was received (namely ATPM1), instead of outputting the upstream traffic to the protection module ATPM2, it preferably discards such upstream traffic. This allows avoiding any traffic loop whereby upstream traffic would be transmitted back and forth between the access nodes AN1, AN2. Similarly, when the edge switch ESW2 realizes that the protection module EUPM2 is in protection configuration and would accordingly forward the downstream traffic to the same protection module from which traffic was received (namely EUPM1), instead of outputting the downstream traffic to the protection module EUPM2, it preferably discards such downstream traffic. This allows avoiding any traffic loop whereby downstream traffic would be transmitted back and forth between the edge nodes EN1, EN2.

Hence, at the access nodes AN1, AN2 and at the edge nodes EN1, EN2 no computation resources and no bandwidth are needlessly used for processing the upstream traffic and downstream traffic, respectively. Also the physical protection link ATPL between the access nodes AN1, AN2 and the physical protection link EUPL between the edge nodes EN1, EN2 are not needlessly occupied by such traffic.

The above described protection mechanism according to embodiments of the present invention advantageously allows avoiding traffic loops also in case of other combinations of bi-directional failures substantially simultaneously occurring at the interconnection between the networks UN and TN. For instance, in case both the access nodes AN1, AN2 are simultaneously failed, according to the above described protection mechanism downstream traffic is discarded at the secondary edge node EN2, thereby avoiding traffic loops between the edge nodes EN1, EN2. Similarly, in case both the edge nodes EN1, EN2 are simultaneously failed, according to the above described protection mechanism upstream traffic is discarded at the secondary access node AN2, thereby avoiding traffic loops between the access nodes AN1, AN2. Again, in case both the secondary access node AN2 and the primary network link NL1 are simultaneously failed, according to the above described protection mechanism downstream traffic is discarded at the secondary edge node EN2, thereby avoiding traffic loops between the edge nodes EN1, EN2. Similarly, in case both the secondary edge node EN2 and the primary network link NL1 are simultaneously failed, according to the above described protection mechanism upstream traffic is discarded at the secondary access node AN2, thereby avoiding traffic loops between the access nodes AN1, AN2.

Hence, in case of a double failure which cannot be bypassed by either downstream or upstream traffic received at the interconnection between the user network UN and the transport network TN, the protection mechanism according to embodiments of the present invention advantageously allows avoiding waste of bandwidth and computational resources at the interconnection.

Further, advantageously, the steps of the flow chart of Figure 3 may be implemented as an additional feature of a known 1+1 protection mechanism. For instance, in case the transport network TN is an SDH network, the steps of the flow chart of Figure 3 may be implemented at the edge nodes EN1, EN2 as an additional feature of the 1+1 protection mechanism defined by the ITU-T Recommendation G.841. Similarly, in case the transport network TN is a T-MPLS network, the steps of the flow chart of Figure 3 may be implemented at the edge nodes EN1, EN2 as an additional feature of the 1+1 protection mechanism defined by the ITU-T Recommendation G.8131. Similarly, in case the user network UN is an Ethernet network, the steps of the flow chart of Figure 3 may be implemented at the access nodes AN1, AN2 as an additional feature of the 1+1 protection mechanism defined by the ITU-T Recommendation G.8031.

Although the above detailed description has been made with reference to the interconnection between a user network and a transport network, this is not limiting. Indeed, the protection mechanism according to embodiments of the present invention may be applied to any network interconnection which is based on a dual redundancy scheme comprising a primary node and a secondary node reciprocally interconnected by a protection link, such as for instance an interconnection between two networks of the same type or of different types, an interconnection between two sub-networks or an interconnection between two portions of a same communication network.

## Claims

1. A method for protecting an interconnection between a first communication network (UN) and a second communication network (TN), said first communication network (UN) comprising a node (AN2) and a further node (AN1) connected to said second communication network (TN), said node (AN2) and said further node (AN1) being connected by a protection link (AUPL, ATPL), said node (AN2) comprising a switch (ASW2) and at least one protection module (AUPM2, ATPM2) connected to at least one output of said switch (ASW2), said method comprising, at said switch (ASW2), upon reception of a packet:
a) based on a packet destination of said packet, determining, among said at least one protection module (AUPM2, ATPM2), an output protection module (AUPM2) to which said packet shall be forwarded;
b) determining whether said packet was received from a further protection module (AUPM1) which is comprised in said further node (AN1) and which implements, together with said output protection module (AUPM2), a bi-directional protection connection over said protection link (AUPL, ATPL), said determining being based upon protection information stored at said node (AN2) and comprising at least an identifier of said further protection module (AUPM1);
c) in the affirmative, determining a current configuration of said output protection module (AUPM2); and
d) if said current configuration is a protection configuration whereby said output protection module (AUPM2) forwards traffic received from said switch (ASW2) to said protection link (PL), discarding said packet.

2. The method according to claim 1, wherein said step c) further comprises, in the negative, forwarding said packet to said output protection module (AUPM2).

3. The method according to any of the preceding claims, wherein said step d) further comprises, if said current configuration of said output protection module (AUPM2) is an active configuration whereby said output protection module (AUPM2) forwards traffic received from said switch (ASW2) to a still further node other than said further node (AN1), forwarding said packet to said output protection module (AUPM2).

4. The method according to claim 1, wherein at said step c), said current configuration of said output protection module (AUPM2) is determined based on said protection information, said protection information further comprising said current configuration.

5. A node (Ni) for a communication network, said node (Ni) comprising a switch (SWi) and at least one protection module (PMi) connected to at least one output of said switch (SWi), said switch (SWi) being configured to, upon reception of a packet:
- based on a packet destination of said packet, determine, among said at least one protection module (PMi), an output protection module (PMi) to which said packet shall be forwarded;
- determine whether said packet was received from a further protection module (PMj) which is comprised in a further node (Nj) and which implements, together with said output protection module (PMi), a bi-directional protection connection over a protection link (PL) connecting said node (Ni) and said further node (Nj), based upon protection information stored at said node (Ni) and comprising at least an identifier of said further protection module (PMj);
- in the affirmative, determine a current configuration of said output protection module (PMi); and
- if said current configuration is a protection configuration whereby said output protection module (PMi) forwards traffic received from said switch (SWi) to said protection link (PL), discard said packet.

6. The node (Ni) according to claim 5, wherein said switch (SWi) is further configured to, if said packet was not received from said further protection module (PMj), forward said packet to said output protection module (PMi).

7. The node (Ni) according to claim 5 or 6, wherein said switch (SWi) is further configured to, if said current configuration of said output protection module (PMi) is an active configuration whereby said output protection module (PMi) forwards traffic received from said switch (SWi) to a still further node other than said further node (Nj), forwarding said packet to said output protection module (PMi).

8. The node (Ni) according to claim 5, wherein said protection information comprises said current configuration of said output protection module (PMi).

9. A communication system (CS) comprising a first communication network (UN) and a second communication network (TN), said first communication network (UN) comprising a node (AN2) and a further node (AN1) connected to said second communication network (TN), said node (AN2) and said further node (AN1) being connected by a protection link (AUPL, ATPL), said node (AN2) being according to any of claims 5 to 8.

10. A computer program product comprising computer-executable instructions for performing, when the program is run on a computer at a node (Ni) of a communication network (UN, TN), all the steps of the method according to any of claims 1 to 4.

## Patentansprüche

1. Verfahren zum Schutz einer Verbindung zwischen einem ersten Kommunikationsnetz (UN) und einem zweiten Kommunikationsnetz (TN), wobei das besagte erste Kommunikationsnetz (UN) einen Knoten (AN2) und einen weiteren Knoten (AN1) umfasst, die mit dem besagten zweiten Kommunikationsnetz (TN) verbunden sind, wobei der besagte Knoten (AN2) und der besagte weitere Knoten (AN1) durch eine Schutzverbindung (AUPL, ATPL) verbunden sind, wobei der besagte Knoten (AN2) einen Schalter (ASW2) und mindestens ein Schutzmodul (AUPM2, ATPM2) umfasst, das mit mindestens einem Ausgang des besagten Schalters (ASW2) verbunden ist, wobei das besagte Verfahren an dem besagten Schalter (ASW2) nach Empfang eines Pakets Folgendes umfasst:
a) basierend auf einem Paketziel des besagten Pakets, Bestimmen, unter dem besagten mindestens einen Schutzmodul (AUPM2, ATPM2), eines Ausgangsschutzmoduls (AUPM2), an welches das besagte Paket weitergeleitet werden soll;
b) Bestimmen, ob das besagte Paket von einem weiteren Schutzmodul (AUPM1) empfangen wurde, das in dem besagten weiteren Knoten (AN1) enthalten ist und das zusammen mit dem besagten Ausgangsschutzmodul (AUPM2) einen bidirektionalen Schutzanschluss über die besagte Schutzverbindung (AUPL, ATPL) implementiert, wobei das besagte Bestimmen auf Schutzinformationen basiert, die an dem besagten Knoten (AN2) gespeichert sind und mindestens einen Identifikator des besagten weiteren Schutzmoduls (AUPM1) umfassen;
c) bei Bejahung, Bestimmen einer aktuellen Konfiguration des besagten Ausgangsschutzmoduls (AUPM2); und
d) falls die besagte aktuelle Konfiguration eine Schutzkonfiguration ist, wobei das besagte Ausgangsschutzmodul (AUPM2) einen von dem besagten Schalter (ASW2) empfangenen Verkehr an die besagte Schutzverbindung (PL) weiterleitet, Verwerfen des besagten Pakets.

2. Verfahren nach Anspruch 1, wobei der besagte Schritt c) bei Verneinung weiterhin das Weiterleiten des besagten Pakets an das besagte Ausgangsschutzmodul (AUPM2) umfasst.

3. Verfahren nach einem beliebigen der vorstehenden Ansprüche, wobei der besagte Schritt d) weiterhin das Weiterleiten des besagten Pakets an das besagte Ausgangsschutzmodul (AUPM2) umfasst, falls die besagte aktuelle Konfiguration des besagten Ausgangsschutzmoduls (AUPM2) eine aktive Konfiguration ist, wobei das besagte Ausgangsschutzmodul (AUPM2) einen von dem besagten Schalter (ASW2) empfangenen Verkehr noch an einen anderen Knoten als den besagten weiteren Knoten (AN1) weiterleitet.

4. Verfahren nach Anspruch 1, wobei an dem besagten Schritt c) die besagte aktuelle Konfiguration des besagten Ausgangsschutzmoduls (AUPM2) basierend auf den besagten Schutzinformationen bestimmt wird, wobei die besagten Schutzinformationen weiterhin die besagte aktuelle Konfiguration umfassen.

5. Knoten (Ni) für ein Kommunikationsnetz, wobei der besagte Knoten (Ni) einen Schalter (SWi) und mindestens ein Schutzmodul (PMi) umfasst, das mit mindestens einem Ausgang des besagten Schalters (SWi) verbunden ist, wobei der besagte Schalter (SWi), nach Empfang eines Pakets, ausgelegt ist zum:
- basierend auf einem Paketziel des besagten Pakets, Bestimmen, unter dem besagten mindestens einen Schutzmodul (PMi), eines Ausgangsschutzmoduls (PMi), an welches das besagte Paket weitergeleitet werden soll;
- Bestimmen, ob das besagte Paket von einem weiteren Schutzmodul (PMj) empfangen wurde, das in einem weiteren Knoten (Nj) enthalten ist und das zusammen mit dem besagten Ausgangsschutzmodul (PMi) einen bidirektionalen Schutzanschluss über eine Schutzverbindung (PL) implementiert, die den besagten Knoten (Ni) und den besagten weiteren Knoten (Nj) verbindet, basierend auf Schutzinformationen, die an dem besagten Knoten (Ni) gespeichert sind und mindestens einen Identifikator des besagten weiteren Schutzmoduls (PMj) umfassen;
- bei Bejahung, Bestimmen einer aktuellen Konfiguration des besagten Ausgangsschutzmoduls (PMi); und
- falls die besagte aktuelle Konfiguration eine Schutzkonfiguration ist, wobei das besagte Ausgangsschutzmodul (PMi) einen von dem besagten Schalter (SWi) empfangenen Verkehr an die besagte Schutzverbindung (PL) weiterleitet, Verwerfen des besagten Pakets.

6. Knoten (Ni) nach Anspruch 5, wobei der besagte Schalter (SWi) weiterhin ausgelegt ist zum Weiterleiten des besagten Pakets an das besagte Ausgangsschutzmodul (PMi), falls das besagte Paket nicht von dem besagten weiteren Schutzmodul (PMj) empfangen wurde.

7. Knoten (Ni) nach Anspruch 5 oder 6, wobei der besagte Schalter (SWi) weiterhin ausgelegt ist zum Weiterleiten des besagten Pakets an das besagte Ausgangsschutzmodul (PMi), falls die besagte aktuelle Konfiguration des besagten Ausgangsschutzmoduls (PMi) eine aktive Konfiguration ist, wobei das besagte Ausgangsschutzmodul (PMi) einen von dem besagten Schalter (SWi) empfangenen Verkehr noch an einen anderen Knoten als den besagten weiteren Knoten (Nj) weiterleitet.

8. Knoten (Ni) nach Anspruch 5, wobei die besagten Schutzinformationen die besagte aktuelle Konfiguration des besagten Ausgangsschutzmoduls (PMi) umfassen.

9. Kommunikationssystem (CS) mit einem ersten Kommunikationsnetz (UN) und einem zweiten Kommunikationsnetz (TN), wobei das besagte erste Kommunikationsnetz (UN) einen Knoten (AN2) und einen weiteren Knoten (AN1) umfasst, die mit dem besagten zweiten Kommunikationsnetz (TN) verbunden sind, wobei der besagte Knoten (AN2) und der besagte weitere Knoten (AN1) durch eine Schutzverbindung (AUPL, ATPL) verbunden sind, wobei der besagte Knoten (AN2) einem beliebigen der Ansprüche 5 bis 8 entspricht.

10. Computerprogrammprodukt mit computerausführbaren Anweisungen zum Durchführen aller Schritte des Verfahrens nach einem beliebigen der Ansprüche 1 bis 4, wenn das Programm auf einem Computer an einem Knoten (Ni) eines Kommunikationsnetzes (UN, TN) gestartet wird.

## Revendications

1. Procédé de protection d'une interconnexion entre un premier réseau de communication (UN) et un deuxième réseau de communication (TN), ledit premier réseau de communication (UN) comprenant un noeud (AN2) et un autre noeud (AN1) connectés audit deuxième réseau de communication (TN), ledit noeud (AN2) et ledit autre noeud (AN1) étant connectés au moyen d'une liaison de protection (AUPL, ATPL), ledit noeud (AN2) comprenant un commutateur (ASW2) et au moins un module de protection (AUPM2, ATPM2) connecté à au moins une sortie dudit commutateur (ASW2), ledit procédé comprenant les étapes suivantes, au niveau dudit commutateur (ASW2), lors de la réception d'un paquet :
a) sur la base d'une destination de paquet dudit paquet, déterminer, parmi ledit au moins un module de protection (AUPM2, ATPM2), un module de protection de sortie (AUPM2) vers lequel ledit paquet doit être transféré ;
b) déterminer si ledit paquet provient d'un autre module de protection (AUPM1) qui est contenu dans ledit autre noeud (AN1) et qui met en oeuvre, avec ledit module de protection de sortie (AUPM2), une connexion de protection bidirectionnelle sur ladite liaison de protection (AUPL, ATPL), ladite détermination étant basée sur des informations de protection stockées au niveau dudit noeud (AN2) et comprenant au moins un identifiant dudit autre module de protection (AUPM1) ;
c) si tel est le cas, déterminer une configuration actuelle dudit module de protection de sortie (AUPM2) ; et
d) si ladite configuration actuelle est une configuration de protection par laquelle ledit module de protection de sortie (AUPM2) transfère le trafic entre ledit commutateur (ASW2) et ladite liaison de protection (PL), éliminer ledit paquet.

2. Procédé selon la revendication 1, dans lequel ladite étape c) comprend en outre, si tel n'est pas le cas, le transfert dudit paquet vers ledit module de protection de sortie (AUPM2).

3. Procédé selon l'une quelconque des revendications précédentes, dans lequel ladite étape d) comprend en outre, si ladite configuration actuelle dudit module de protection de sortie (AUPM2) est une configuration active par laquelle ledit module de protection de sortie (AUPM2) transfère le trafic entre ledit commutateur (ASW2) et encore un autre noeud différent dudit autre noeud (AN1), le transfert dudit paquet vers ledit module de protection de sortie (AUPM2).

4. Procédé selon la revendication 1, dans lequel à ladite étape c), ladite configuration actuelle dudit module de protection de sortie (AUPM2) est déterminée sur la base desdites informations de protection, lesdites informations de protection comprenant en outre ladite configuration actuelle.

5. Noeud (Ni) pour un réseau de communication, ledit noeud (Ni) comprenant un commutateur (SWi) et au moins un module de protection (PMi) connecté à au moins une sortie dudit commutateur (SWi), ledit commutateur (SWi) étant configuré pour, lors de la réception d'un paquet :
- sur la base d'une destination de paquet dudit paquet, déterminer, parmi ledit au moins un module de protection (PMi), un module de protection de sortie (PMi) vers lequel ledit paquet doit être transféré ;
- déterminer si ledit paquet provient d'un autre module de protection (PMj) qui est contenu dans un autre noeud (Nj) et qui met en oeuvre, avec ledit module de protection de sortie (PMi), une connexion de protection bidirectionnelle sur une liaison de protection (PL) reliant ledit noeud (Ni) et ledit autre noeud (Nj), sur la base d'informations de protection stockées au niveau dudit noeud (Ni) et comprenant au moins un identifiant dudit autre module de protection (PMj) ;
- si tel est le cas, déterminer une configuration actuelle dudit module de protection de sortie (PMi) ; et
- si ladite configuration actuelle est une configuration de protection par laquelle ledit module de protection de sortie (PMi) transfère le trafic entre ledit commutateur (SWi) et ladite liaison de protection (PL), éliminer ledit paquet.

6. Noeud (Ni) selon la revendication 5, dans lequel ledit commutateur (SWi) est en outre configuré, si ledit paquet ne provient pas dudit autre module de protection (PMj), pour transférer ledit paquet vers ledit module de protection de sortie (PMi).

7. Noeud (Ni) selon la revendication 5 ou 6, dans lequel ledit commutateur (SWi) est en outre configuré, si ladite configuration actuelle dudit module de protection de sortie (PMi) est une configuration active par laquelle ledit module de protection de sortie (PMi) transfère le trafic entre ledit commutateur (SWi) et encore un autre noeud différent dudit autre noeud (Nj), pour transférer ledit paquet vers ledit module de protection de sortie (PMi).

8. Noeud (Ni) selon la revendication 5, dans lequel lesdites informations de protection comprennent ladite configuration actuelle dudit module de protection de sortie (PMi).

9. Système de communication (CS) comprenant un premier réseau de communication (UN) et un deuxième réseau de communication (TN), ledit premier réseau de communication (UN) comprenant un noeud (AN2) et un autre noeud (AN1) connectés audit deuxième réseau de communication (TN), ledit noeud (AN2) et ledit autre noeud (AN1) étant connectés au moyen d'une liaison de protection (AUPL, ATPL), ledit noeud (AN2) étant selon l'une quelconque des revendications 5 à 8.

10. Produit de programme informatique comprenant des instructions exécutables par ordinateur pour exécuter, lorsque le programme est exécuté sur un ordinateur au niveau d'un noeud (Ni) d'un réseau de communication (UN, TN), toutes les étapes du procédé selon l'une quelconque des revendications 1 à 4.
